# DEMANDE DE BREVET EUROPEEN

(11) **EP 1 615 070 A2**
(43) Date de publication de la demande: **11.01.2006**
(21) Numéro de dépôt: 05014890.7
(22) Date de dépôt: 08.07.2005
(51) Int. Cl.: G03B 21/62, G09F 19/18

(54) **Ecran de projection**

(30) Priorité: 08.07.2004 FR 0451477
(71) Demandeur: Curti, Patrick, 06380 Sospel (FR)
(72) Inventeur: Curti, Patrick, 06380 Sospel (FR)
(74) Mandataire: Rhein, Alain

(57) **Abrégé**

Ecran de projection pour la reproduction sur ses deux faces d'une image, du type constitué d'un film en matériau transparent associé à des moyens de réflexion partielle.

Il est constitué de l'assujettissement l'un contre l'autre de deux films transparents présentant chacun une face opalisée.

## Description

La présente invention a pour objet un écran de projection pour la reproduction sur ses deux faces d'une image, et le procédé de fabrication dudit écran.

L'écran objet de la présente invention est plus particulièrement destiné à la diffusion d'informations, à caractère publicitaire notamment, sur des surfaces de vente par exemple.

De manière générale, les écrans de projection sont soit à réflexion soit à transmission, les premiers sont constitués d'un matériau réflecteur permettant de reproduire sur une face une image projetée du même côté, tandis que les seconds sont destinés à la reproduction sur une face de l'écran d'une image projetée de l'autre côté et sont constitués d'un matériau transparent, au moins en partie.

Pour permettre la reproduction d'une image sur les deux faces d'un écran à réflexion, il est nécessaire de réaliser une projection sur chacune de ces faces.

Les écrans à transmission sont ceux utilisés dans les rétroprojecteurs, ils ne sont pas prévus expressément pour la reproduction d'une image sur leurs deux faces.

On connaît par le document WO2004036310, un écran de projection de film à image des deux côtés, qui est constitué d'un film de matière plastique telle que du polyester, ou du polycarbonate, possédant des propriétés de transmission optique élevée, et qui incorpore une matière de réfraction de la lumière, qui consiste en des particules de silice. En fonction de l'épaisseur de l'écran et de la taille desdites particules, on obtient la division d'une image projetée d'un côté de l'écran, en deux images projetées chacune sur une des faces dudit écran.

Un tel écran de projection est destiné à être disposé sur la paroi vitrée d'une vitrine de magasin, ou suspendu à un plafond.

Si cet écran permet d'atteindre le but recherché, à savoir obtenir une image des deux côtés à partir d'une seule image projetée, il présente néanmoins des inconvénients. En effet, outre son coût de fabrication élevé, les images reproduites ne sont parfaitement nettes que pour les personnes disposées en face de l'écran, d'un côté ou de l'autre de celui-ci.

La présente invention a pour but de remédier à cet inconvénient en proposant un écran de projection pour la reproduction sur ses deux faces d'une image, ainsi que le procédé de fabrication de cet écran.

L'écran de projection pour la reproduction sur ses deux faces d'une image selon l'invention est du type constitué d'un film en matériau transparent associé à des moyens de réflexion partielle, et il se caractérise essentiellement en ce qu'il est constitué de l'assujettissement l'un contre l'autre de deux films transparents présentant chacun une face opalisée.

Les deux faces opalisées constituent chacune un écran permettant la reproduction de l'image projetée, tandis que la faible épaisseur du film n'est pas suffisante à créer, par réfraction, un décalage perceptible entre les deux images lorsque l'on n'est pas placé directement en face de l'une ou l'autre des faces de l'écran. L'image reproduite sur cet écran de projection est donc visible de manière nette, non dédoublée, sur quasiment 360°.

Selon une caractéristique additionnelle de l'écran de projection selon l'invention, les films consistent en des films en polyester.

Selon une autre caractéristique additionnelle de l'écran de projection selon l'invention, l'une de ses faces est encollée en sorte de permettre son application sur une surface vitrée.

Selon un premier mode de fabrication de l'écran de projection selon l'invention, les deux films sont assujettis par collage.

Selon une caractéristique additionnelle du premier mode de fabrication de l'écran de projection selon l'invention, l'un des films présente une face pré-encollée recouverte d'une feuille de protection destinée à être enlevée avant mise en contact de ladite face avec l'autre film.

Selon un second mode de fabrication du dispositif selon l'invention, les deux films sont assujettis par laminage à chaud ou à froid.

Selon une autre caractéristique additionnelle du dispositif selon l'invention, l'opalisation des faces est obtenue par traitement de surface.

Quel que soit son mode de fabrication, un écran selon l'invention est de conception simple donc peu coûteuse, tout en étant d'une grande efficacité, et sans présenter les inconvénients des dispositifs existants.

## Revendications

1. Ecran de projection pour la reproduction sur ses deux faces d'une image, du type constitué d'un film en matériau transparent associé à des moyens de réflexion partielle, **caractérisé en ce qu'**il est constitué de l'assujettissement l'un contre l'autre de deux films transparents présentant chacun une face opalisée.

2. Ecran de projection selon la revendication 1, **caractérisé en ce que** les films consistent en des films en polyester.

3. Ecran de projection selon la revendication 1 ou la revendication 2, **caractérisé en ce que** l'une de ses faces est encollée en sorte de permettre son application sur une surface vitrée.

4. Ecran de projection selon l'une quelconque des revendications précédentes, **caractérisé en ce que** les deux films sont assujettis par collage.

5. Ecran de projection selon la revendication 4, **caractérisé en ce que** l'un des films présente une face pré-encollée recouverte d'une feuille de protection destinée à être enlevée avant mise en contact de ladite face avec l'autre film.

6. Ecran de projection selon l'une quelconque des revendications 1 à 3, **caractérisé en ce que** les deux films sont assujettis par laminage à chaud ou à froid.

7. Ecran de projection selon l'une quelconque des revendications précédentes, **caractérisé en ce que** l'opalisation des faces est obtenue par traitement de surface.
